(19) Europäisches Patentamt
European Patent Office
Office européen des brevets

(11) EP 2 592 676 B1

(12) **EUROPEAN PATENT SPECIFICATION**

(45) Date of publication and mention of the grant of the patent:
**26.08.2015 Bulletin 2015/35**

(21) Application number: **12182326.4**

(22) Date of filing: **30.08.2012**

(51) Int Cl.:
***H01M 4/134*** (2010.01) ***H01M 10/052*** (2010.01)
***H01M 10/0525*** (2010.01) ***H01M 10/0567*** (2010.01)
***H01M 10/0569*** (2010.01) ***H01M 4/485*** (2010.01)
***H01M 4/133*** (2010.01) ***H01M 4/38*** (2006.01)

(54) **Electrolyte for rechargeable lithium battery, and rechargeable lithium battery including the same**

Elektrolyt für eine wiederaufladbare Lithium-Batterie und wiederaufladbare Lithium-Batterie, die diesen Elektrolyten enthält

Électrolyte pour batterie au lithium rechargeable, et batterie au lithium rechargeable le comprenant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2011 US 201161559627 P**
**17.08.2012 US 201213588801**

(43) Date of publication of application:
**15.05.2013 Bulletin 2013/20**

(73) Proprietor: **Samsung SDI Co., Ltd.**
**Yongin-si, Gyeonggi-do (KR)**

(72) Inventors:
- **Oh, Mi-Hyeun**
**Gyeonggi-do (KR)**
- **Yang, Ho-Seok**
**Gyeonggi-do (KR)**
- **Park, Dai-In**
**Gyeonggi-do (KR)**
- **Lim, Jin-Hyunk**
**Gyeonggi-do (KR)**

(74) Representative: **Russell, Tim et al**
**Venner Shipley LLP**
**200 Aldersgate**
**London EC1A 4HD (GB)**

(56) References cited:
**EP-A1- 2 498 329**
**JP-A- 2007 141 831**
**US-A1- 2001 019 800**
**US-A1- 2006 124 973**
**US-A1- 2010 261 068**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 592 676 B1

## Description

The present invention relates to the use of an electrolyte solution in a rechargeable lithium battery and a rechargeable lithium battery including the same.

Lithium rechargeable batteries have recently drawn attention as power sources for small portable electronic devices. Lithium rechargeable batteries use an organic electrolyte solution and thereby have twice the discharge voltage of a conventional battery using an alkali aqueous solution and as a result, have high energy density.

Such a rechargeable lithium battery includes a positive electrode including a positive active material being capable of intercalating or deintercalating lithium and a negative electrode including a negative active material being capable of intercalating or deintercalating lithium, and an electrolyte solution.

A recent attempt has been made to apply a high voltage to a rechargeable lithium battery in order to stabilize price and increase capacity, but the rechargeable lithium battery has sharply deteriorated a cycle-life, which may not be applied to a real product. In particular, the rechargeable lithium battery has increased resistance at a low temperature and thus, seriously deteriorated cycle-life at a low temperature. In order to improve low temperature characteristics and capacity of a rechargeable lithium battery, a rechargeable lithium battery using a negative electrode including Si has been researched, but has another problem of a side reaction between Si and a conventional organic solvent.

US 2010/261068 discloses a non-aqueous electrolyte including (i) a compound having an S=O group; (ii) a mixed organic solvent containing a carbonate and an ester compound; and (iii) an electrolyte salt.

US 2006/124973 discloses an energy storage device comprising: a positive electrode; a negative electrode; a separator electrically separating said positive and negative electrode from each other; an electrolytic solution having an aprotic non-aqueous solvent comprising mobile ions; and a region in at least one of said positive and negative electrodes where a charge adsorbing/desorbing reaction occurs.

JP 2007 141831 discloses a non-aqueous electrolyte solution for a secondary battery containing a non-aqueous solvent, a lithium salt and a chain carboxylate ester.

US 2001/019800 discloses a rechargeable lithium electrochemical cell comprising an electrolyte containing a lithium salt dissolved in a non-aqueous solvent, at least one positive electrode, and at least one negative electrode of the paste type containing an electrochemically active material which is a carbon compound suitable for inserting lithium ions and a binder.

EP 2498329 discloses a non-aqueous electrolyte for a rechargeable lithium battery comprising: a lithium salt; a non-aqueous organic solvent; a first additive of lithium difluoro(oxalate) borate; and a second additive selected from the group consisting of tris(trialkylsilyl)phosphate, tris(trialkylsilyl)phosphite, tris(trialkylsilyl)borate, and mixtures thereof.

According to a first aspect of the present invention there is provided a rechargeable lithium battery comprising: a positive electrode comprising a positive active material; a negative electrode comprising a negative active material wherein the negative active material comprises a Si-based compound and a carbon material, and the Si-based compound and the carbon material are included in a weight ratio ranging from 1:99 to 10:90; and an electrolyte solution that includes a lithium salt; a non-aqueous organic solvent including alkylacetate; and an electrolyte additive including a sultone-based compound, wherein the sultone-based compound is included in an amount of 0.1 to 5 wt% based on the total weight of the electrolyte solution.

A rechargeable lithium battery according to the present invention may have excellent cycle-life characteristics at a high voltage and a low temperature. The rechargeable lithium battery may improve high temperature cycle-life characteristics by minimizing a side reaction between a Si-based compound and non-aqueous organic solvent.

Preferably, the alkyl acetate is a $C_1$-$C_{10}$ alkyl acetate. In an embodiment, the alkyl acetate is selected from the group consisting of methyl acetate, ethyl acetate and propyl acetate.

The alkyl acetate may be included in an amount of 10 to 60 volume% based on the total amount of the non-aqueous organic solvent.

The sultone-based compound may be selected from the group consisting of $C_1$ to $C_{10}$ alkane sultones, $C_2$ to $C_{10}$ alkene sultones, and combinations thereof.

The $C_1$ to $C_{10}$ alkane sultone or $C_2$ to $C_{10}$ alkene sultone may be selected from 1,3-propane sultone, 1,3-propene sultone, 1,4-butane sultone and a combination thereof.

The non-aqueous organic solvent may be selected from ethylene carbonate (EC), ethylmethyl carbonate (EMC), dimethyl carbonate (DMC), diethyl carbonate (DEC), propyl carbonate (PC), and a combination thereof.

The non-aqueous organic solvent may include ethylene carbonate (EC) and dimethyl carbonate (DMC) in a volume ratio of 1:1 to 1:3.5.

The Si-based compound may be selected from Si, $SiO_x$ ($0 < x < 2$; preferably $1<x<2$), a Si-carbon composite, a Si-Q alloy (wherein Q is selected from an alkali metal, an alkaline-earth metal, elements selected from Group 13 to 16, a transition element, a rare earth element, and a combination thereof, but not Si), and a combination thereof.

The electrolyte solution for a rechargeable lithium battery may realize a rechargeable lithium battery having excellent cycle-life characteristics at a high voltage at a low/high temperature.

A rechargeable lithium battery according to the present invention may have improved capacity as well as low temperature cycle-life characteristics by using Si as a negative active material and minimizing a side reaction between Si and an electrolyte solution and thus, improving high temperature cycle-life characteristics.

A more complete appreciation of the present invention, and many of the attendant advantages thereof, will be readily apparent as the same becomes better understood by reference to the following detailed description when considered in conjunction with the accompanying drawings, wherein:

Figure 1 is a schematic view of a rechargeable lithium battery according to an embodiment of the present invention;

Figure 2 is a graph showing cycle-life characteristics of the rechargeable lithium battery cells according to Comparative Examples 9 to 12 and Comparative Examples 23 to 25 at a high temperature of 45°C;

Figure 3 is a graph showing high temperature (45°C) cycle-life characteristic of the rechargeable lithium battery cells according to Examples 14 and 16.

Exemplary embodiments will hereinafter be described in detail.

The electrolyte solution for a rechargeable lithium battery of the invention includes a lithium salt; a non-aqueous organic solvent including an alkyl acetate; and an additive including a sultone-based compound, wherein the sultone-based compound is included in an amount of 0.1 to 5 wt% based on the total weight of the electrolyte solution.

Hereinafter, each component is described in detail.

(a) Lithium salt

The lithium salt is dissolved in the non-aqueous solvent and supplies lithium ions in a rechargeable lithium battery, and basically operates the rechargeable lithium battery and improves lithium ion transfer between positive and negative electrodes. The lithium salt include at least one supporting salt selected from $LiPF_6$, $LiBF_4$, $LiSbF_6$, $LiAsF_6$, $LiC_4F_9SO_3$, $LiClO_4$, $LiAlO_2$, $LiAlCl_4$, $LiN(C_xF_{2x+1}SO_2)(C_yF_{2y+1}SO_2)$ (wherein, x and y are natural numbers), LiCl, LiI, LiB $C_2O_{42}$, LiBOB (lithium bis(oxalato) borate), LiTFSI (lithium bis(trifluoromethanesulfonyl)imide, or a mixture thereof. The lithium salt may be used in a concentration of 0.1 to 2.0M. When the lithium salt is included within the above concentration range, the electrolyte solution may realize electrolyte performance due to optimal conductivity and viscosity and lithium ion may be effectively transported.

(b) Non-aqueous organic solvent

The non-aqueous organic solvent of the electrolyte solution for a rechargeable lithium battery includes an alkyl acetate. The alkyl acetate may be selected from the group consisting of methyl acetate, ethyl acetate and propyl acetate.

The alkyl acetate may be included in an amount ranging from 10 to 60 volume% and for example, from 20 to 40 volume% based on the total amount of the non-aqueous organic solvent. When the non-aqueous organic solvent includes an alkyl acetate within this range, an electrolyte solution may increase discharge capacity of a rechargeable battery by about 40 to 70% compared with an electrolyte solution including no alkyl acetate, thereby improving cycle-life and cycle characteristics of the rechargeable battery.

The non-aqueous organic solvent may further include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC),and the like. The ester-based solvent may include methyl acetate, ethyl acetate, n-propyl acetate, methylpropionate, ethylpropionate, $\gamma$-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like.The ketone-based solvent may include cyclohexanone, and the like. The alcohol-based solvent may include ethanol, isopropyl alcohol, and the like. The aprotic solvent may include nitriles such as R-CN (R is a $C_2$ to $C_{20}$ linear, branched or cyclic hydrocarbon group including a double bond, an aromatic ring or an ether bond), amides such as dimethyl formamide, and the like, dioxolanes such as 1,3-dioxolane, and the like, sulfolanes, and the like.

The mixing ratio of the organic solvents in the non-aqueous organic solvent may be controlled in accordance with the desired performance of a battery, which would be understood by the skilled person in the art.

The non-aqueous organic solvent may include ethylene carbonate (EC) and dimethyl carbonate (DMC) in a volume ratio of 1:1 to 1:3.5.

The carbonate-based solvent may include a mixture of a cyclic carbonate and a linear carbonate. The cyclic carbonate and the linear carbonate may be mixed together in a volume ratio of about 1 : 1 to about 1 : 9 and the electrolyte

may have enhanced performance.

The electrolyte may be prepared by further adding an aromatic hydrocarbon-based solvent to the carbonate-based solvent. The carbonate-based solvent and the aromatic hydrocarbon-based solvent are mixed together in a volume ratio of about 1 : 1 to about 30 : 1.

The aromatic hydrocarbon-based organic solvent may be an aromatic hydrocarbon-based compound represented by the following Chemical Formula 1.

[Chemical Formula 1]

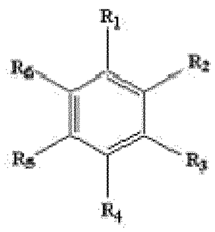

In Chemical Formula 1, $R_1$ to $R_6$ are each independently hydrogen, halogen, a $C_1$ to $C_{10}$ alkyl group, a $C_1$ to $C_{10}$ haloalkyl group, or a combination thereof.

The aromatic hydrocarbon-based organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

(c) Additive

The electrolyte solution for a rechargeable lithium battery includes an additive of a sultone-based compound, and the sultone-based compound is included in an amount of 0.1 to 5 wt% based on the total amount of the electrolyte solution.

The sultone-based compound may include a $C_1$ to $C_{10}$ alkane sultone, a $C_2$ to $C_{10}$ alkene sultone, and the like.Examples thereof include one selected from 1,3-propane sultone, 1,3-propene sultone, 1,4-butane sultone and a combination thereof.

Specifically, the additive of the sultone-based compound may be included in an amount of 0.1 to 5 wt%, preferably 1 to 3 wt% based on the total amount of the electrolyte solution. When the sultone-based compound is included within this range, a rechargeable lithium battery comprising the electrolyte solution may have improved low temperature and high temperature cycle-life characteristics.

The electrolyte solution including alkyl acetate comprises a sultone-based compound as an additive and thus, may solve high temperature cycle-life characteristic deterioration of a conventional negative active material including a Si-based compound. The reason that the electrolyte solution including the sultone-based compound improves high temperature cycle-life characteristics of a negative active material including a Si-based compound is that the sultone-based compound is reduced and forms a layer on the interface of a negative electrode during the charge and discharge of a battery, which suppresses a side reaction between the Si-based compound and the electrolyte solution. This prevents destruction of the structure of the Si-based compound during intercalatation and deintercalation of lithium.

The effect that a sultone-based compound, when present in an electrolyte solution in an amount of 0.1 to 5 wt%, suppresses a side reaction between a Si-based compound, and the electrolyte solution therefore improves high temperature cycle-life characteristics may be more significant when the electrolyte solution includes an alkyl acetate.

The electrolyte solution for a rechargeable lithium battery may further include vinylene carbonate or an ethylene carbonate-based compound represented by the following Chemical Formula 2 as an additive to improve battery cycle-life.

[Chemical Formula 2]

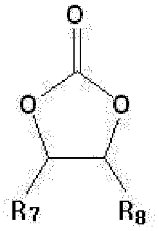

In Chemical Formula 2, $R_7$ and $R_8$ are each independently hydrogen, a halogen, a cyano group (CN), a nitro group ($NO_2$), or a $C_1$ to $C_5$ fluoroalkyl group, provided that at least one of $R_7$ and $R_8$ is a halogen, a cyano group (CN), a nitro group ($NO_2$), or a $C_1$ to $C_5$ fluoroalkyl group.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. When the vinylene carbonate or the ethylene carbonate-based compound is further used, use amounts thereof may be adjusted within an appropriate range.

A rechargeable lithium battery may be classified as a lithium ion battery, a lithium ion polymer battery, and a lithium polymer battery according to the presence of a separator and the kind of an electrolyte used therein. The rechargeable lithium battery may have a variety of shapes and sizes and thus, may include a cylindrical, prismatic, coin, or pouch-type battery and a thin film type or a bulky type in size. The structure and fabricating methods for lithium batteries pertaining to the present invention are well known in the art.

Figure 1 is an exploded perspective view showing the schematic structure of a rechargeable lithium battery. Referring to Figure 1, the rechargeable lithium battery 100 includes a negative electrode 112, a positive electrode 114, a separator 113 interposed between the negative electrode 112 and the positive electrode 114, an electrolyte (not shown) impregnating the negative electrode 112, positive electrode 114, and separator 113, a battery case 120, and a sealing member 140 sealing the battery case 120. The rechargeable lithium battery 100 is fabricated by sequentially laminating a negative electrode m2, a positive electrode 114, and a separator 113, spirally winding them, and housing the spiral-wound product in a battery case 120.

The negative electrode 112 includes a current collector and a negative active material layer disposed on the current collector. The negative active material layer includes a negative active material.

The negative active material comprises a carbon material, and a Si-based compound.

The carbon material may be any carbon-based negative active material generally used in a lithium ion rechargeable battery. Examples of the carbon material are crystalline carbon, amorphous carbon, and mixtures thereof. The crystalline carbon may be non-shaped, or sheet, flake, spherical, or fiber-shaped natural graphite or artificial graphite. The amorphous carbon may be a soft carbon (carbon fired at low temperature), a hard carbon, a mesophase pitch carbonized product, fired coke, and the like.

The Si-based compound may be Si, $SiO_x$ ($0 < x < 2$, preferably $1<x<2$), a Si-C composite, or a Si-Q alloy (wherein Q is an alkali metal, an alkaline-earth metal, elements selected from group 13 to 16, a transition element, a rare earth element, or a combination thereof, but not Si). The Si-based compound may be included in an amount of 1 to 10 wt% based on the total amount of the negative active material. Preferably, the Si-based compound may be included in an amount of 2 to 6% based on the total amount of the negative active material. The Si-based compound has a high discharge capacity compared with a carbon material such as graphite and the like. In addition, since an electrolyte solution including an alkyl acetate and a sultone-based compound in an amount ranging from 0.1 wt% to 5 wt% prohibits the side reaction between the electrolyte solution and the Si-based compound, a negative active material including the Si-based compound may bring about a high discharge capacity and excellent high temperature cycle-life characteristics.

The Q of the Si-Q alloy may include one selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The Si-based compound is used along with a carbon material such as artificial graphite, natural graphite, and the like. The Si-based compound and the carbon material are mixed in a weight ratio ranging from 1:99 to 10:90. A negative active material satisfying this range may realize a good room temperature cycle-life and simultaneously improve high temperature cycle-life.

The negative active material layer may include a binder and optionally, a conductive material.

The binder improves binding properties of negative active material particles with one another and with a current collector. Examples of the binder include at least one selected from polyvinyl alcohol, carboxymethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material improves electrical conductivity of a negative electrode. Any electrically conductive material can be used as a conductive agent, unless it causes a chemical change. Examples of the conductive material include at least one selected from a carbon-based material such as natural graphite, artificial graphite, carbon black, acetylene black, ketjen black, carbon fiber, and the like; a metal-based material of a metal powder or a metal fiber including copper, nickel, aluminum, silver or the like; a conductive polymer such as a polyphenylene derivative, and the like; or a mixture thereof.

Examples of the current collector include a copper foil, a nickel foil, a stainless steel foil, a titanium foil, a nickel foam, a copper foam, a polymer substrate coated with a conductive metal, or combinations thereof.

The positive electrode 114 may include a current collector and a positive active material layer formed on the current collector.

The positive active material may include a compound (a lithiated intercalation compound) capable of reversibly intercalating and deintercalating lithium. Examples of the positive active material may include at least one composite oxide of a metal such as cobalt, manganese, nickel, or a combination thereof with lithium and in particular, one of the compounds represented by the following Chemical Formulae: $Li_aA_{1-b}R_bD_2$(wherein, in the above Chemical Formula, $0.90 \leq a \leq 1.8$ and or $\leq b \leq 0.5$); $Li_aE_{1-b}R_bO_{2-c}D_c$(wherein, in the above Chemical Formula, $0.90 \leq a \leq 1.8$, $0 \leq b \leq 0.5$ and $0 \leq c \leq 0.05$); $LiE_{2-b}R_bO_{4-c}D_c$(wherein, in the above Chemical Formula, $0 \leq b \leq 0.5$, $0 \leq c \leq 0.05$); $Li_aNi_{1-b-c}Co_bR_c$-$D_\alpha$(wherein, in the above Chemical Formula, $0.90 \leq a \leq 1.8$, $o \leq b \leq 0.5$, $0 \leq c \leq 0.05$ and $o < \alpha \leq 2$); $Li_aNi_{1-b-c}Co_bR_cO_{2-\alpha}Z_\alpha$(wherein, in the above Chemical Formula, $0.90 \leq a \leq 1.8$, $0 \leq b \leq 0.5$, $0 \leq c \leq 0.05$ and $0 < \alpha < 2$); $Li_aNi_{i}$-$_b$-$_cCo_bR_c0_2$-$_aZ_2$(wherein, in the above Chemical Formula, $0.90 \leq a \leq 1.8$, $0 \leq b \leq 0.5$, $0 \leq c \leq 0.05$ and $0 < \alpha < 2$); $Li_aNi_{1-b-c}Mn_bR_cD_\alpha$(wherein, in the above Chemical Formula, $0.90 \leq a \leq 1.8$, $0 \leq b \leq 0.5$, $0 \leq c \leq 0.05$ and $0 < \alpha \leq 2$); $Li_aNi_{1-b-c}Mn_bR_cO_{2-\alpha}Z_\alpha$(wherein, in the above Chemical Formula, $0.90 \leq a \leq 1.8$, $0 \leq b \leq 0.5$, $0 \leq c \leq 0.05$ and $0 < \alpha < 2$); $Li_aNi_{1-b-c}Mn_bR_cO_{2-\alpha}Z_2$(wherein, in the above Chemical Formula, $0.90 \leq a \leq 1.8$, $0 \leq b \leq 0.5$, $0 \leq c \leq 0.05$ and $0 < \alpha < 2$); $Li_aNi_bE_cG_dO_2$(wherein, in the above Chemical Formula, $0.90 \leq a \leq 1.8$, $0 \leq b \leq 0.9$, $0 \leq c \leq 0.5$ and $0.001 \leq d \leq 0.1$.); $Li_aNi_bCo_cMn_dG_eO_2$(wherein, in the above Chemical Formula, $0.90 \leq a \leq 1.8$, $0 \leq b \leq 0.9$, $0 \leq c \leq 0.5$, $0 \leq d \leq 0.5$ and $0.001 \leq e \leq 0.1$.); $Li_aNiG_bO_2$(wherein, in the above Chemical Formula, $0.90 \leq a \leq 1.8$ and $0.001 \leq b \leq 0.1$.); $Li_aCoG_bO_2$(wherein, in the above Chemical Formula, $0.90 \leq a \leq 1.8$ and $0.001 \leq b \leq 0.1$.); $Li_aMnG_bO_2$(wherein, in the above Chemical Formula, $0.90 \leq a \leq 1.8$ and $0.001 \leq b \leq 0.1$.); $Li_aMn_2G_bO_4$(wherein, in the above Chemical Formula, $0.90 \leq a \leq 1.8$ and $0.001 \leq b \leq 0.1$.); $QO_2$; $QS_2$; $LiQS_2$; $V_2O_5$; $LiV_2O_5$; $LiTO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In these Chemical Formulae, A is selected from Ni, Co, Mn, and a combination thereof; R is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; Z is selected from F, S, P, and a combination thereof; G is selected from Al, Cr, Mn, Fe, Mg, La, Ce, Sr, V, and a combination thereof; Q is selected from Ti, Mo, Mn, and a combination thereof; T is selected from Cr, V, Fe, Sc, Y, and a combination thereof; and J is selected from V, Cr, Mn, Co, Ni, Cu, and a combination thereof.

The positive active material may include a positive active material with a coating layer, or a compound of the active material and the active material coated with the coating layer. The coating layer may include at least one coating element compound selected from the group consisting of an oxide and a hydroxide of the coating element, an oxyhydroxide of the coating element, an oxycarbonate of the coating element, and a hydroxycarbonate of the coating element. The compound for the coating layer may be either amorphous or crystalline. The coating element included in the coating layer may be one selected from Mg, Al, Co, K, Na, Ca, Si, Ti, V, Sn, Ge, Ga, B, As, Zr, and a combination thereof. The coating process may include any conventional processes as long as it does not cause any side effects on the properties of the positive active material (e.g., spray coating, immersing), which is well known to persons having ordinary skill in this art, so a detailed description thereof is omitted.

The positive active material layer may also include a binder and a conductive material.

The binder improves binding properties of the positive active material particles to each other and to a current collector. Examples of the binder include at least one selected from polyvinylalcohol, carboxymethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a positive electrode. Any electrically conductive material can be used as a conductive agent unless it causes a chemical change. Examples of the conductive material include natural graphite, artificial graphite, carbon black, acetylene black, ketjen black, a carbon fiber, a metal powder or a metal fiber of copper, nickel, aluminum, silver, and the like; a conductive polymer such as a polyphenylene derivative,

or a mixture thereof.

The positive current collector may include Al, but is not limited thereto.

The negative electrode 112 and the positive electrode 114 may be fabricated by a method including mixing the respective active material, a binder, and a conductive material to provide an active material slurry, and coating the active material slurry on a current collector. The electrode manufacturing method is well known, and thus is not described in detail in the present specification. The solvent includes N-methylpyrrolidone, deionized water, and the like, but is not limited thereto.

The electrolyte solution is as described with reference to the above.

The rechargeable lithium battery may include a separator 113 between the positive electrode 114 and negative electrode 112, if needed. The separator 113 may be formed of polyethylene, polypropylene, polyvinylidene fluoride or multilayers thereof such as a polyethylene/polypropylene double-layered separator, a polyethylene/polypropylene/polyethylene triple-layered separator, and a polypropylene/polyethylene/polypropylene triple-layered separator.

The following examples illustrate the present invention in more detail. These examples, however, should not in any sense be interpreted as limiting the scope of the present invention.

**Example 1 (Reference)**

Preparation of Electrolyte solution

Ethylene carbonate (EC), ethyl acetate (EA), and dimethyl carbonate (DMC) were mixed in a volume ratio of 20:10:70, and $LiPF_6$ was added thereto in a concentration of 1.4 M. Then, 1 wt% of propane sultone (PS) was added to the mixed solution based on the total amount of the electrolyte solution.

Fabrication of Rechargeable lithium battery cell

$LiCoO_2$, polyvinylidene fluoride (PVDF), and denka black were mixed in a weight ratio of 97.75:1.25:1 ($LiCoO_2$:PVDF:denka black) in an N-methylpyrrolidone solvent, preparing a positive active material slurry. The positive active material slurry was uniformly coated on a 20 μm-thick aluminum current collector and dried, fabricating a positive electrode.

A negative active material slurry was prepared by mixing artificial graphite and a styrene-butadiene rubber (SBR) binder in a weight ratio of 98.5:1.5. The negative active material slurry was uniformly coated on a 15 μm-thick copper current collector and dried, fabricating a negative electrode.

The positive and negative electrodes and an electrolyte solution were used to fabricate a rechargeable lithium battery cell according to a common method.

**Example 2 (Reference)**

A rechargeable lithium battery cell was fabricated according to the same method as Example 1 except for mixing EC:EA:DMC in a volume ratio of 20:20:60.

**Example 3 (Reference)**

A rechargeable lithium battery cell was fabricated according to the same method as Example 1 except for using EC:EA:DMC in a volume ratio of 20:40:40.

**Example 4 (Reference)**

A rechargeable lithium battery cell was fabricated according to the same method as Example 1 except for using EC:EA:DMC in a volume ratio of 20:60:20.

**Example 5 (Reference)**

A rechargeable lithium battery cell was fabricated according to the same method as Example 1 except for using an electrolyte including 3wt% of PS.

**Example 6 (Reference)**

A rechargeable lithium battery cell was fabricated according to the same method as Example 1 except for

mixing EC:EA:DMC in a volume ratio of 20:40:40 and including 3wt% of PS.

**Example 7 (Reference)**

A rechargeable lithium battery cell was fabricated according to the same method as Example 1 except for mixing EC:EA:DMC in a volume ratio of 20:60:20 and including 3 wt% of PS.

**Example 8**

Preparation of Electrolyte solution

An electrolyte solution for a rechargeable lithium battery was prepared according to the same method as Example 1 except for mixing EC:EA:DMC in a volume ratio of 20:20:60.

Fabrication of Rechargeable lithium battery

A negative active material slurry was prepared by including Si as well as artificial graphite as a negative active material wherein Si and artificial graphite mixed in a weight ratio of 5:95. $SiO_x$ (0<x<2) was used as the source of the Si. Then, a rechargeable lithium battery cell was fabricated according to the same method as Example 1 except for using the negative active material slurry and the electrolyte solution in the example.

**Example 9**

Preparation of Electrolyte solution

An electrolyte solution for a rechargeable lithium battery was prepared according to the same method as Example 1 except for mixing EC: EA: DMC in a weight ratio of 20:60:20.

Fabrication of Rechargeable lithium battery cell

A negative active material slurry was prepared by including Si as well as artificial graphite as a negative active material wherein mixing Si and artificial graphite in a weight ratio of 3:97. A rechargeable lithium battery cell was fabricated according to the same method as Example 1 except for using the negative active material slurry and the electrolyte solution in the example.

**Example 10**

A rechargeable lithium battery cell was fabricated according to the same method as Example 8 except for using an electrolyte including 3 wt% of PS.

**Example 11**

A rechargeable lithium battery cell was fabricated according to the same method as Example 9 except for using an electrolyte solution including 3 wt% of PS.

**Example 12 (Reference)**

A rechargeable lithium battery cell was fabricated according to the same method as Example 2 except for using an electrolyte solution including 5wt% of PS.

**Example 13**

A rechargeable lithium battery cell was fabricated according to the same method as Example 10 except for using an electrolyte solution including 5wt% of PS.

**Example 14**

A rechargeable lithium battery cell was fabricated according to the same method as Example 8 except for using

an electrolyte solution including 1 wt% of propene sultone (PST) instead of PS.

**Example 15**

A rechargeable lithium battery cell was fabricated according to the same method as Example 14 except for using a negative active material slurry prepared by including Si as well as artificial graphite wherein Si and artificial graphite were mixed at a weight ratio of 3:97.

**Example 16**

A rechargeable lithium battery cell was fabricated according to the same method as Example 14 except for using an electrolyte solution including 3wt% of propene sultone (PST).

**Example 17**

A rechargeable lithium battery cell was fabricated according to the same method as Example 15 except for using an electrolyte solution including 3wt% of propene sultone (PST).

**Example 18 (Reference)**

A rechargeable lithium battery cell was fabricated according to the same method as Example 2 except for using an electrolyte solution including 1 wt% of propene sultone (PST) instead of PS.

**Example 19**

Preparation of Electrolyte solution

Ethylene carbonate (EC), methyl acetate (MA) and dimethyl carbonate (DMC) were mixed in a volume ratio of 20:10:70, and $LiPF_6$ was added thereto in a concentration of 1.4M. Then, 1 wt% of propane sultone (PS) was added to the mixed solution based on the total amount of the electrolyte solution.

Fabrication of Rechargeable lithium battery

A negative active material slurry was prepared by including Si as well as artificial graphite as a negative active material wherein Si and artificial graphite mixed in a weight ratio of 5:95. Then, a rechargeable lithium battery cell was fabricated according to the same method as Example 1 except for using the negative active material slurry and the electrolyte solution in the example.

**Example 20**

A rechargeable lithium battery cell was fabricated according to the same method as example 19, except for mixing EC:MA:DMC in a volume ratio of 20:60:20 and including 3 wt% of PS.

**Example 21**

Ethylene carbonate (EC), propyl acetate (PA) and dimethyl carbonate (DMC) were mixed in a volume ratio of 20:10:70, and LiPF6 was added thereto in a concentration of 1.4M. Then, 1 wt% of propane sultone (PS) was added to the mixed solution based on the total amount of the electrolyte solution.

Fabrication of Rechargeable lithium battery

A negative active material slurry was prepared by including Si as well as artificial graphite as a negative active material wherein Si and artificial graphite mixed in a weight ratio of 5:95. Then, a rechargeable lithium battery cell was fabricated according to the same method as Example 1 except for using the negative active material slurry and the electrolyte solution in the example.

**Example 22**

A rechargeable lithium battery cell was fabricated according to the same method as example 21, except for mixing EC:PA:DMC in a volume ratio of 20:60:20 and including 3 wt% of PS.

**Comparative Examples 1 to 25**

A rechargeable lithium battery cell was fabricated according to the same method as Example 1 by using an electrolyte solution including an additive PS or PST in an amount indicated in the following Table 1 and positive and negative active materials and an organic solvent indicated in the following Table 1.

**Table 1**

| | Positive active material | Negative active material (weight ratio) | | Lithium salt (M) | organic solvent (volume%) | | | | | | Sultone-based compound (wt%) | |
|---|---|---|---|---|---|---|---|---|---|---|---|---|
| | | artificial graphite | Si | $LiPF_6$ | EC | EMC | DMC | EA | MA | PA | PS | PST |
| Reference Example 1 | $LiCoO_2$ | 100 | - | 1.4 | 20 | - | 70 | 10 | - | - | 1 | - |
| Reference Example 2 | $LiCoO_2$ | 100 | - | 1.4 | 20 | - | 60 | 20 | - | - | 1 | - |
| Reference Example 3 | $LiCoO_2$ | 100 | - | 1.4 | 20 | - | 40 | 40 | - | - | 1 | - |
| Reference Example 4 | $LiCoO_2$ | 100 | - | 1.4 | 20 | - | 20 | 60 | - | - | 1 | - |
| Reference Example 5 | $LiCoO_2$ | 100 | - | 1.4 | 20 | - | 70 | 10 | - | - | 3 | - |
| Reference Example 6 | $LiCoO_2$ | 100 | - | 1.4 | 20 | - | 40 | 40 | - | - | 3 | - |
| Reference Example 7 | $LiCoO_2$ | 100 | - | 1.4 | 20 | - | 20 | 60 | - | - | 3 | - |
| Example 8 | $LiCoO_2$ | 95 | 5 | 1.4 | 20 | - | 60 | 20 | - | - | 1 | - |
| Example 9 | $LiCoO_2$ | 97 | 3 | 1.4 | 20 | - | 20 | 60 | - | - | 1 | - |
| Example 10 | $LiCoO_2$ | 95 | 5 | 1.4 | 20 | - | 60 | 20 | - | - | 3 | - |
| Example 11 | $LiCoO_2$ | 97 | 3 | 1.4 | 20 | - | 20 | 60 | - | - | 3 | - |
| Reference Example 12 | $LiCoO_2$ | 100 | - | 1.4 | 20 | - | 60 | 20 | - | - | 5 | - |
| Example 13 | $LiCoO_2$ | 95 | 5 | 1.4 | 20 | - | 60 | 20 | - | - | 5 | - |
| Example 14 | $LiCoO_2$ | 95 | 5 | 1.4 | 20 | - | 60 | 20 | - | - | - | 1 |
| Example 15 | $LiCoO_2$ | 97 | 3 | 1.4 | 20 | - | 60 | 20 | - | - | - | 1 |
| Example 16 | $LiCoO_2$ | 95 | 5 | 1.4 | 20 | - | 60 | 20 | - | - | - | 3 |
| Example 17 | $LiCoO_2$ | 97 | 3 | 1.4 | 20 | - | 60 | 20 | - | - | - | 3 |
| Reference Example 18 | $LiCoO_2$ | 100 | - | 1.4 | 20 | - | 60 | 20 | - | - | - | 1 |
| Example 19 | $LiCoO_2$ | 95 | 5 | 1.4 | 20 | - | 70 | - | 10 | - | 1 | - |
| Example 20 | $LiCoO_2$ | 95 | 5 | 1.4 | 20 | - | 20 | - | 60 | - | 3 | - |
| Example 21 | $LiCoO_2$ | 95 | 5 | 1.4 | 20 | - | 70 | - | - | 10 | 1 | - |

(continued)

| | Positive active material | Negative active material (weight ratio) | | Lithium salt (M) | organic solvent (volume%) | | | | | | Sultone-based compound (wt%) | |
|---|---|---|---|---|---|---|---|---|---|---|---|---|
| | | artificial graphite | Si | $LiPF_6$ | EC | EMC | DMC | EA | MA | PA | PS | PST |
| Example 22 | $LiCoO_2$ | 95 | 5 | 1.4 | 20 | - | 20 | - | - | 60 | 3 | - |
| Comparative Example 1 | $LiCoO_2$ | 100 | - | 1.4 | 20 | 20 | 60 | - | - | - | 1 | |
| Comparative Example 2 | $LiCoO_2$ | 100 | - | 1.4 | 20 | 40 | 40 | - | - | - | 1 | |
| Comparative Example 3 | $LiCoO_2$ | 89 | 11 | 1.4 | 20 | 20 | 60 | - | - | - | 1 | |
| Comparative Example 4 | $LiCoO_2$ | 100 | - | 1.4 | 20 | - | 80 | 0 | - | - | 0 | |
| Comparative Example 5 | $LiCoO_2$ | 100 | - | 1.4 | 20 | - | 70 | 10 | - | - | 0 | |
| Comparative Example 6 | $LiCoO_2$ | 100 | - | 1.4 | 20 | - | 40 | 40 | - | - | 0 | |
| Comparative Example 7 | $LiCoO_2$ | 100 | - | 1.4 | 20 | - | 20 | 60 | - | - | 0 | |
| Comparative Example 8 | $LiCoO_2$ | 100 | - | 1.4 | 20 | - | 0 | 80 | - | - | 0 | |
| Comparative Example 9 | $LiCoO_2$ | 89 | 11 | 1.4 | 20 | - | 80 | 0 | - | - | 0 | |
| Comparative Example 10 | $LiCoO_2$ | $8_9$ | 11 | 1.4 | 20 | - | 60 | 20 | - | - | 0 | |
| Comparative Example 11 | $LiCoO_2$ | 89 | 11 | 1.4 | 20 | - | 20 | 60 | - | - | 0 | |
| Comparative Example 12 | $LiCoO_2$ | 89 | 11 | 1.4 | 20 | - | 0 | 80 | - | - | 0 | |
| Comparative Example 13 | $LiCoO_2$ | 100 | - | 1.4 | 20 | - | 70 | 10 | - | - | 6 | |

(continued)

| | Positive active material | Negative active material (weight ratio) | | Lithium salt (M) | organic solvent (volume%) | | | | | | Sultone-based compound (wt%) | |
|---|---|---|---|---|---|---|---|---|---|---|---|---|
| | | artificial graphite | Si | $LiPF_6$ | EC | EMC | DMC | EA | MA | PA | PS | PST |
| Comparative Example 14 | $LiCoO_2$ | 100 | - | 1.4 | 20 | - | 40 | 40 | - | - | 6 | |
| Comparative Example 15 | $LiCoO_2$ | 100 | - | 1.4 | 20 | - | 20 | 60 | - | - | 6 | |
| Comparative Example 16 | $LiCoO_2$ | $8_9$ | 11 | 1.4 | 20 | - | 60 | 20 | - | - | 6 | |
| Comparative Example 17 | $LiCoO_2$ | 89 | 11 | 1.4 | 20 | - | 20 | 60 | - | - | 6 | |
| Comparative Example 18 | $LiCoO_2$ | 89 | 11 | 1.4 | 20 | - | 20 | 60 | - | - | - | 6 |
| Comparative Example 19 | $LiCoO_2$ | 89 | 11 | 1.4 | 20 | - | 40 | 40 | - | - | - | 6 |
| Comparative Example 20 | $LiCoO_2$ | 89 | 11 | 1.4 | 20 | - | 60 | 20 | - | - | - | 6 |
| Comparative Example 21 | $LiCoO_2$ | 95 | 5 | 1.4 | 20 | 60 | 20 | - | - | - | | 1 |
| Comparative Example 22 | $LiCoO_2$ | 100 | - | 1.4 | 20 | 60 | 20 | - | - | - | | 1 |
| Comparative Example 23 | $LiCoO_2$ | 95 | 5 | | 20 | 20 | 60 | - | - | - | | 1 |
| Comparative Example 24 | $LiCoO_2$ | 95 | 5 | 1.4 | 20 | - | 60 | 20 | - | - | - | 6 |
| Comparative Example 25 | $LiCoO_2$ | 95 | 5 | 1.4 | 20 | - | 20 | 60 | - | - | - | 6 |

Experimental Example 1: Cycle Characteristic Evaluation of Rechargeable Lithium Battery Cells at a low temperature of 10°C

The rechargeable lithium battery cells according to Examples 1 to 22 and Comparative Examples 1 to 25 were experimented to evaluate cycle-life characteristics at a low temperature in the following method.
Specifically, low temperature capacities of the rechargeable lithium battery cells according to the Examples and Comparative Examples was measured by charging them under a CC-CV condition of 0.5C and 4.35V of a charge voltage, allowing them to stand at 10°C for 2 hours, and discharging them at 0.5C down to 3 V.
In addition, cycle-life characteristics of the rechargeable lithium battery cells according to the Examples and Comparative Examples were evaluated by charging them under a CC-CV condition of 0.5 C and 4.35V of a charge voltage at a room temperature for 2 hours and discharging them at a cut-off of 1.0C and 3.0V in one cycle and repeating 50 cycles.
Then, low temperature cycle-life characteristics of the rechargeable lithium battery cells were evaluated as capacity retention (%) measured at a room temperature of 25°C, and the capacity retention (%) at low temperature was calculated according to the following equation 1.

Equation (1)

capacity retention (%) = 50 cycle discharge capacity/ initial discharge capacity X 100

(Initial discharge capacity: 2950 mAh)

Experimental Example 2: Cycle characteristic evaluation of Rechargeable lithium battery Cells at a high temperature of 45°C

The rechargeable lithium battery cells according to Examples 1 to 22 and Comparative Examples 1 to 25 were experimented in the following method to evaluate high temperature cycle-life characteristics.
Specifically, high temperature capacities of the rechargeable lithium battery cells according to Examples and Comparative Examples was measured by charging them under a CC-CV condition of 0.8C and 4.2V or 4.35V of a charge voltage, allowing them to stand at 45°C for 2 hours, and discharging them down to 3V with 0.5C.
In addition, cycle-life characteristics of the rechargeable lithium battery cells were evaluated by charging them at a room temperature under a CC-CV condition of 0.5 C and 4.2 or 4.35V of a charge voltage for 2 hours and discharging them under a cut-off of 1.0C and 3.0V in one cycle and repeating 130 cycles.
The high temperature cycle-life characteristics were evaluated as capacity retention (%) measured at 45°C, and the capacity retention (%) at high temperature was calculated according to the following equation 2.

Equation (2)
capacity retention (%) = 130 cycle discharge capacity/initial discharge capacity X 100 (initial discharge capacity: 2950 mAh)

The results of Experimental Examples 1 and 2 are provided in the following Table 2.

[Table 2]

| | 10 °C (50th cycle) | | 45 °C (130th cycle) | |
|---|---|---|---|---|
| | Discharge capacity (mAh) | Capacity retention (%) | Discharge capacity (mAh) | Capacity retention (%) |
| Reference Example 1 | 2526 | 86 | 2057 | 70 |
| Reference Example 2 | 2605 | 88 | 2155 | 73 |

(continued)

| | 10 °C (50th cycle) | | 45 °C (130th cycle) | |
|---|---|---|---|---|
| | Discharge capacity (mAh) | Capacity retention (%) | Discharge capacity (mAh) | Capacity retention (%) |
| Reference Example 1 | 2526 | 86 | 2057 | 70 |
| Reference Example 3 | 2516 | 85 | 2134 | 72 |
| Reference Example 4 | 2414 | 82 | 2018 | 68 |
| Reference Example 5 | 2246 | 76 | 1947 | 66 |
| Reference Example 6 | 2482 | 84 | 1955 | 66 |
| Reference Example 7 | 2310 | 78 | 1918 | 65 |
| Example 8 | 2713 | 92 | 2760 | 94 |
| Example 9 | 2709 | 92 | 2450 | 83 |
| Example 10 | 2714 | 92 | 2684 | 91 |
| Example 11 | 2720 | 92 | 2387 | 81 |
| Reference Example 12 | 2426 | 82 | 2102 | 71 |
| Example 13 | 2433 | 82 | 2548 | 86 |
| Example 14 | 2487 | 84 | 2679 | 91 |
| Example 15 | 2411 | 82 | 2703 | 92 |
| Example 16 | 2439 | 83 | 2666 | 90 |
| Example 17 | 2410 | 82 | 2659 | 90 |
| Reference Example 18 | 2452 | 83 | 2135 | 72 |
| Example 19 | 2087 | 71 | 1904 | 65 |
| Example 20 | 2146 | 73 | 2051 | 70 |
| Example 21 | 2200 | 75 | 1846 | 63 |
| Example 22 | 2209 | 75 | 1875 | 64 |
| Comparative Example 1 | 1521 | 3 | 108 | 4 |
| Comparative Example 2 | 1431 | 52 | 52 | 2 |
| Comparative Example 3 | 947 | 49 | 434 | 15 |
| Comparative Example 4 | 717 | 32 | 18 | 1 |
| Comparative Example 5 | 1858 | 24 | 1368 | 46 |

(continued)

| | 10 °C (50th cycle) | | 45 °C (130th cycle) | |
|---|---|---|---|---|
| | Discharge capacity (mAh) | Capacity retention (%) | Discharge capacity (mAh) | Capacity retention (%) |
| Reference Example 1 | 2526 | 86 | 2057 | 70 |
| Comparative Example 6 | 1949 | 63 | 1425 | 48 |
| Comparative Example 7 | 1181 | 66 | 1401 | 47 |
| Comparative Example 8 | 746 | 40 | 448 | 15 |
| Comparative Example 9 | 82 | 3 | 156 | 5 |
| Comparative Example 10 | 1218 | 41 | 1662 | 56 |
| Comparative Example 11 | 1647 | 56 | 1630 | 55 |
| Comparative Example 12 | 827 | 28 | 1452 | 49 |
| Comparative Example 13 | 1170 | 40 | 1447 | 49 |
| Comparative Example 14 | 825 | 28 | 1322 | 45 |
| Comparative Example 15 | 1397 | 47 | 1085 | 37 |
| Comparative Example 16 | 1107 | 38 | 1578 | 53 |
| Comparative Example 17 | 998 | 34 | 1684 | 57 |
| Comparative Example 18 | 1184 | 40 | 1029 | 35 |
| Comparative Example 19 | 1220 | 41 | 1097 | 37 |
| Comparative Example 20 | 1242 | 42 | 1052 | 36 |
| Comparative Example 21 | 284 | 10 | 312 | 11 |
| Comparative Example 22 | 307 | 10 | 208 | 7 |
| Comparative Example 23 | 405 | 14 | 164 | 6 |
| Comparative Example 24 | 395 | 13 | 98i | 33 |
| Comparative Example 25 | 343 | 12 | 1804 | 61 |

In the above Experimental Examples, Comparative Examples 1 and 2 use an electrolyte solution composition including EC, EMC, and DMC. The electrolytes of Examples 2 and 3 were the same as those of as Comparative Examples 1 and 2, except that they included EA instead of EMC. As shown in Table 2, the cells according to Comparative Examples 1 and 2 had remarkably low discharge capacity and capacity retention at a low high temperature and a high temperature compared with the cells according to Examples 2 and 3. In addition, Examples 19 and 20 under the same condition as Comparative Example 1 except for using methyl acetate (MA) instead of ethyl acetate (EA) and Examples 21 and 22 under the same condition as Comparative Example 1, except for using propyl acetate (PA) instead of ethyl acetate (EA), also improved cycle-life characteristics of a rechargeable lithium battery at low and high temperatures. Accordingly, an electrolyte solution including alkyl acetate such as EA, MA, PA, instead of EMC was shown to improve cycle-life characteristics of a rechargeable lithium battery at low and high temperatures.

On the other hand, Examples 8 to 11, 13 to 17 and 19 to 22 using a negative active material including artificial graphite and Si had improved high temperature cycle-life characteristics compared with Examples 1 to 7 using a negative active material including only artificial graphite.

In particular, Example 18, using an electrolyte solution including 1 wt% of PST and EC:EA:DMC in a volume ratio of 2:2:6 and a negative active material including only artificial graphite had a capacity retention of 72% at a high temperature, while Example 14 using the same electrolyte solution and a negative active material including both artificial graphite and Si had a capacity retention of 91% at a high temperature. In other words, an electrolyte solution with the above composition showed significantly improved high temperature cycle-life characteristics despite using a negative active material including Si, since a side reaction between the electrolyte solution and Si was suppressed.

On the other hand, Comparative Examples 21 and 22 experimented at a high temperature under the same condition as Examples 14 and 18, except for using EMC instead of EA, show capacity retention (%) of respectively 11 % and 7%. The results indicates that the degree of improvement of high temperature cycle-life characteristics of a cell using a negative active material including Si is more remarkable when the electrolyte includes an alkyl acetate such as EA. A negative active material including PS or PST as well as Si turned out to remarkably improve high temperature cycle-life characteristic when used with an electrolyte solution including EA. Figures. 2 and 3 show a high temperature cycle-life characteristic at 45°C of a rechargeable lithium battery including both artificial graphite and Si as a negative active material.

As shown in Figure 3, Examples 14 and 16 respectively including 1 wt% and 3 wt% of PST had excellent high temperature cycle-life characteristics.

On the other hand, Comparative Examples 9 to 12, 24, and 25 which used an electrolyte solution including EA, i.e. the same as Examples 14 and 16, but in which no PST, or PST in an amount of more than 5 wt%(such as 6 wt%) was included, showed bad high temperature cycle-life characteristics. In addition, Comparative Example 23 which used an electrolyte including 1 wt% of PST but EMC instead of EA had bad high temperature cycle-life characteristics (Figure 2). Nevertheless, a rechargeable lithium battery including a Si-based compound as a negative active material had an issue of a low temperature cycle-life characteristic deterioration. In general, high temperature cycle-life characteristics were improved when an electrolyte solution including EA and PST in an amount ranging from 0.1 to 5 wt% is used together.

A more complete appreciation of the present invention, and many of the attendant advantages thereof, will be readily apparent as the same becomes better understood by reference to the following detailed description when considered in conjunction with the accompanying drawings, wherein:

Description of symbols

100: rechargeable lithium battery

112: negative electrode

113: separator,

114: positive electrode

120: battery case

140: sealing member

## Claims

1. A rechargeable lithium battery comprising:

   a positive electrode comprising a positive active material;
   a negative electrode comprising a negative active material wherein the negative active material comprises a Si-based compound and a carbon material; and
   an electrolyte solution comprising: a non-aqueous organic solvent including alkyl acetate; a lithium salt; and an electrolyte additive including a sultone-based compound, wherein the sultone-based compound is included in an amount of 0.1 to 5 wt.% based on the total weight of the electrolyte solution, **characterized in that** the Si-based compound and the carbon material are included in a weight ratio ranging from 1:99 to 10:90.

2. A rechargeable lithium battery as claimed in claim 1, wherein the alkyl acetate is selected from the group consisting of methyl acetate, ethyl acetate and propyl acetate.

3. A rechargeable lithium battery as claimed in claim 1 or claim 2, wherein the sultone-based compound is included in an amount of 1 to 3 wt. % based on the total weight of the electrolyte solution.

4. A rechargeable lithium battery as claimed in any preceding claim, wherein the non-aqueous organic solvent includes the alkyl acetate in an amount of 10 to 60 volume % based on the total volume of the non-aqueous organic solvent.

5. A rechargeable lithium battery as claimed in claim 4, wherein the organic solvent includes the alkyl acetate in an amount of 20 to 40 volume % based on the total volume of the non-aqueous organic solvent.

6. A rechargeable lithium battery as claimed in any preceding claim, wherein the sultone-based compound is selected from the group consisting of C1 to C10 alkane sultones and C2 to C10 alkene sultones, and combinations thereof.

7. A rechargeable lithium battery as claimed in claim 6, wherein the sultone-based compound is selected from the group consisting of 1,3-propane sultone, 1,3-propene sultone, 1,4-butane sultone, and combinations thereof.

8. A rechargeable lithium battery as claimed in any preceding claim, wherein the non-aqueous organic solvent is selected from ethylene carbonate (EC), ethylmethyl carbonate (EMC), dimethyl carbonate (DMC), diethyl carbonate (DEC) and propyl carbonate (PC), and combinations thereof.

9. A rechargeable lithium battery as claimed in claim 8, wherein the non-aqueous organic solvent includes ethylene carbonate (EC) and dimethyl carbonate (DMC) in a volume ratio ranging from 1:1 to 1:3.5.

10. A rechargeable lithium battery as claimed in any one of the preceding claims , wherein the Si-based compound is selected from Si, $SiO_x$ (o < x < 2), a Si-carbon composite, a Si-Q alloy (wherein Q is selected from an alkali metal, an alkaline-earth metal, elements selected from Group 13 to 16, a transition element, a rare earth element, and a combination thereof, but not Si), and a combination thereof.

11. Use of an electrolyte solution as defined in any one of claims 1 to 9 in a rechargeable lithium battery comprising a negative active material including a Si-based compound and a carbon material, wherein the Si-based compound and the carbon material are included in a weight ratio ranging from 1:99 to 10:90.

12. The use as claimed in claim 11, wherein the Si-based compound is selected from Si, $SiO_x$ (0 < x < 2), a Si-carbon composite, a Si-Q alloy (wherein Q is selected from an alkali metal, an alkaline-earth metal, elements selected from Group 13 to 16, a transition element, a rare earth element, and a combination thereof, but not Si), and a combination thereof.

## Patentansprüche

1. Wiederaufladbare Lithiumbatterie, umfassend:

   eine positive Elektrode, umfassend ein Positiv-Aktivmaterial;
   eine negative Elektrode, umfassend ein Negativ-Aktivmaterial, wobei das Negativ-Aktivmaterial eine Verbindung

auf Si-Basis und ein Kohlenstoffmaterial umfasst; und
eine Elektrolytlösung, umfassend: ein nichtwässriges organisches Lösungsmittel, das Alkylacetat enthält; ein Lithiumsalz; und einen Elektrolytzusatz, umfassend eine Verbindung auf Sultonbasis, wobei die Verbindung auf Sultonbasis in einer Menge von 0,1 bis 5 Gew.-%, bezogen auf das Gesamtgewicht der Elektrolytlösung, enthalten ist, **dadurch gekennzeichnet, dass** die Verbindung auf Si-Basis und das Kohlenstoffmaterial in einem von 1:99 bis 10:90 reichenden Gewichtsverhältnis enthalten sind.

**2.** Wiederaufladbare Lithiumbatterie nach Anspruch 1, wobei das Alkylacetat ausgewählt ist aus der Gruppe bestehend aus Methylacetat, Ethylacetat und Propylacetat.

**3.** Wiederaufladbare Lithiumbatterie nach Anspruch 1 oder Anspruch 2, wobei die Verbindung auf Sultonbasis in einer Menge von 1 bis 3 Gew.-%, bezogen auf das Gesamtgewicht der Elektrolytlösung, enthalten ist.

**4.** Wiederaufladbare Lithiumbatterie nach einem vorangehenden Anspruch, wobei das nichtwässrige organische Lösungsmittel das Alkylacetat in einer Menge von 10 bis 60 Vol.-%, bezogen auf das Gesamtvolumen des nichtwässrigen organischen Lösungsmittels, enthält.

**5.** Wiederaufladbare Lithiumbatterie nach Anspruch 4, wobei das organische Lösungsmittel das Alkylacetat in einer Menge von 20 bis 40 Vol.-%, bezogen auf das Gesamtvolumen des nichtwässrigen organischen Lösungsmittels, enthält.

**6.** Wiederaufladbare Lithiumbatterie nach einem vorangehenden Anspruch, wobei die Verbindung auf Sultonbasis ausgewählt ist aus der Gruppe bestehend aus $C_1$- bis $C_{10}$-Alkansultonen und $C_2$- bis $C_{10}$-Alkensultonen, und Kombinationen davon.

**7.** Wiederaufladbare Lithiumbatterie nach Anspruch 6, wobei die Verbindung auf Sultonbasis ausgewählt ist aus der Gruppe bestehend aus 1,3-Propansulton, 1,3-Propensulton, 1,4-Butansulton, und Kombinationen davon.

**8.** Wiederaufladbare Lithiumbatterie nach einem vorangehenden Anspruch, wobei das nichtwässrige organische Lösungsmittel ausgewählt ist aus Ethylencarbonat (EC), Ethylmethylcarbonat (EMC), Dimethylcarbonat (DMC), Diethylcarbonat (DEC) und Propylcarbonat (PC), und Kombinationen davon.

**9.** Wiederaufladbare Lithiumbatterie nach Anspruch 8, wobei das nichtwässrige organische Lösungsmittel Ethylencarbonat (EC) und Dimethylcarbonat (DMC) in einem von 1:1 bis 1:3,5 reichenden Volumenverhältnis enthält.

**10.** Wiederaufladbare Lithiumbatterie nach einem der vorangehenden Ansprüche, wobei die Verbindung auf Si-Basis ausgewählt ist aus Si, $SiO_x$ ($0 < x < 2$), einem Silicium-Kohlenstoff-Verbundwerkstoff, einer Si-Q-Legierung (wobei Q ausgewählt ist aus einem Alkalimetall, einem Erdalkalimetall, Elementen, die aus der Gruppe 13 bis 16 ausgewählt sind, einem Übergangsmetall, einem Seltenerdmetall, und einer Kombination davon, aber nicht Si), und einer Kombination davon.

**11.** Verwendung einer Elektrolytlösung, wie definiert in einem der Ansprüche 1 bis 9, in einer wiederaufladbaren Lithiumbatterie, umfassend ein Negativ-Aktivmaterial, enthaltend eine Verbindung auf Si-Basis und ein Kohlenstoffmaterial, wobei die Verbindung auf Si-Basis und das Kohlenstoffmaterial in einem von 1:99 bis 10:90 reichenden Gewichtsverhältnis enthalten sind.

**12.** Verwendung nach Anspruch 11, wobei die Verbindung auf Si-Basis ausgewählt ist aus Si, $SiO_x$ ($0 < x < 2$), einem Silicium-Kohlenstoff-Verbundwerkstoff, einer Si-Q-Legierung (wobei Q ausgewählt ist aus einem Alkalimetall, einem Erdalkalimetall, Elementen, die aus der Gruppe 13 bis 16 ausgewählt sind, einem Übergangsmetall, einem Seltenerdmetall, und einer Kombination davon, aber nicht Si), und einer Kombination davon.

## Revendications

**1.** Batterie au lithium rechargeable, comprenant :

une électrode positive comprenant un matériau actif positif ;
une électrode négative comprenant un matériau actif négatif où le matériau actif négatif comprend un composé

à base de Si et d'un matériau carboné ; et
une solution d'électrolyte comprenant : un solvant organique non aqueux comportant de l'acétate d'alkyle ; un sel de lithium ; et un additif d'électrolyte comportant un composé à base de sultone, dans lequel le composé à base sultone est inclus en une quantité allant de 0,1 à 5 % en poids par rapport au poids total de la solution d'électrolyte, **caractérisée en ce que** le composé à base de Si et le matériau carboné sont inclus selon un rapport pondéral allant de 1:99 à 10:90.

**2.** Batterie au lithium rechargeable telle que revendiquée dans la revendication 1, dans laquelle l'acétate d'alkyle est choisi dans le groupe consistant en l'acétate de méthyle, l'acétate d'éthyle et l'acétate de propyle.

**3.** Batterie au lithium rechargeable telle que revendiquée dans la revendication 1 ou 2, dans laquelle le composé à base sultone est inclus en une quantité allant de 1 à 3 % en poids par rapport au poids total de la solution d'électrolyte.

**4.** Batterie au lithium rechargeable telle que revendiquée dans l'une des revendications précédentes, dans laquelle le solvant organique non aqueux comporte l'acétate d'alkyle en une quantité allant de 10 à 60 % en volume par rapport au volume total du solvant organique non aqueux.

**5.** Batterie au lithium rechargeable telle que revendiquée dans la revendication 4, dans laquelle le solvant organique comporte l'acétate d'alkyle en une quantité allant de 20 à 40 % en volume par rapport au volume total du solvant organique non aqueux.

**6.** Batterie au lithium rechargeable telle que revendiquée dans l'une des revendications précédentes, dans laquelle le composé à base de sultone est choisi dans le groupe consistant en des alcanes sultones en $C_1$ à $C_{10}$ et des alcènes sultones en $C_2$ à $C_{10}$, et leurs combinaisons.

**7.** Batterie au lithium rechargeable telle que revendiquée dans la revendication 6, dans laquelle le composé à base sultone est choisi dans le groupe consistant en le 1,3-propane sultone, le 1,3-propène sultone, le 1,4-butane sultone, et leurs combinaisons.

**8.** Batterie au lithium rechargeable telle que revendiquée dans l'une des revendications précédentes, dans laquelle le solvant organique non aqueux est choisi entre le carbonate d'éthylène (EC), le carbonate d'éthylméthyle (EMC), le carbonate de diméthyle (DMC), le carbonate de diéthyle (DEC) et le carbonate de propyle (PC), et leurs combinaisons.

**9.** Batterie au lithium rechargeable telle que revendiquée dans la revendication 8, dans laquelle le solvant organique non aqueux comporte du carbonate d'éthylène (EC) et du carbonate de diméthyle (DMC) selon un rapport volumique allant de 1:1 à 1:3,5.

**10.** Batterie au lithium rechargeable telle que revendiquée dans l'une quelconque des revendications précédentes, dans laquelle le composé à base de Si est choisi entre le Si, un $SiO_x$ ($0 < x < 2$), un composite carbone-Si, un alliage Si-Q (où Q est choisi entre un métal alcalin, un métal alcalino-terreux, des éléments choisis dans le Groupe 13 à 16, un élément de transition, un élément des terres rares et l'une de leurs combinaisons, à l'exclusion du Si), et l'une de leurs combinaisons.

**11.** Utilisation d'une solution d'électrolyte telle que définie dans l'une quelconque des revendications 1 à 9 dans une batterie au lithium rechargeable comprenant un matériau actif négatif comportant un composé à base de Si et un matériau carboné, où le composé à base de Si et le matériau carboné sont inclus selon un rapport pondéral allant de 1:99 à 10:90.

**12.** Utilisation telle que revendiquée dans la revendication 11, dans laquelle le composé à base de Si est choisi entre le Si, un $SiO_x$ ($0 < x < 2$), un composite carbone-Si, un alliage Si-Q (où Q est choisi entre un métal alcalin, un métal alcalino-terreux, des éléments choisis dans le Groupe 13 à 16, un élément de transition, un élément des terres rares et l'une de leurs combinaisons, à l'exclusion de Si), et l'une de leurs combinaisons.

FIG.1

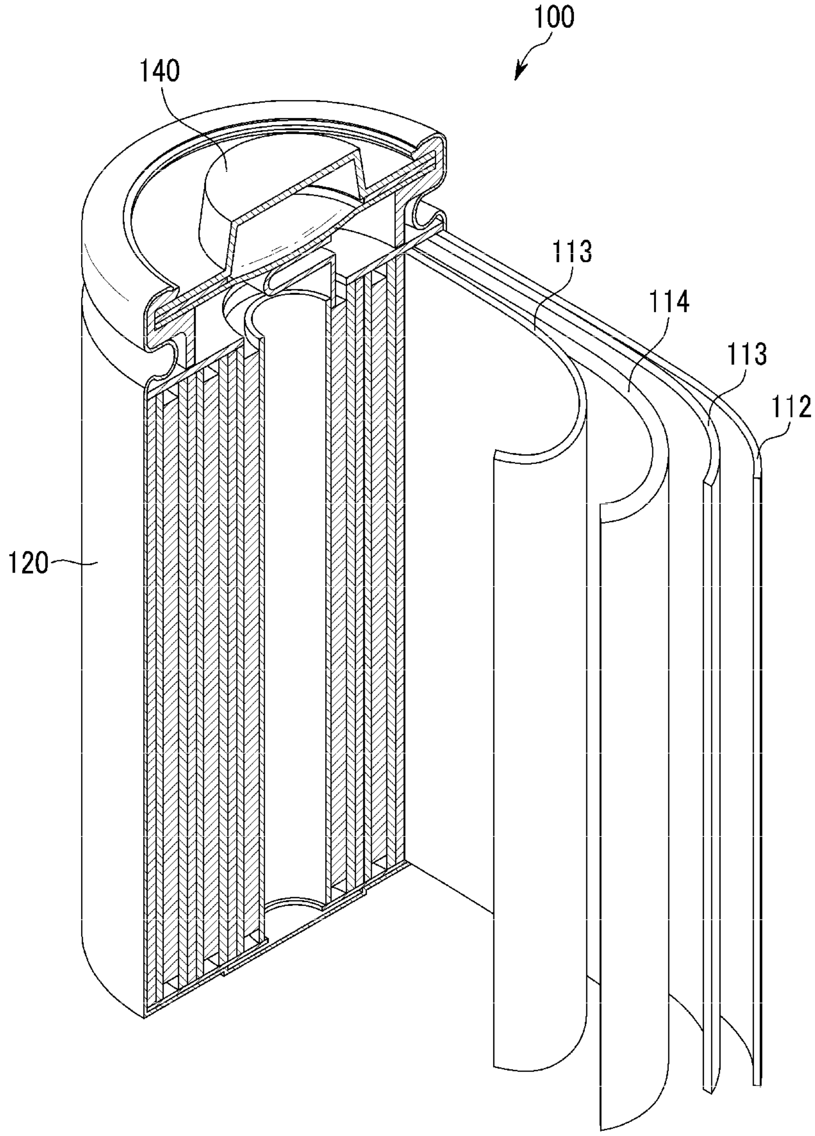

FIG.2

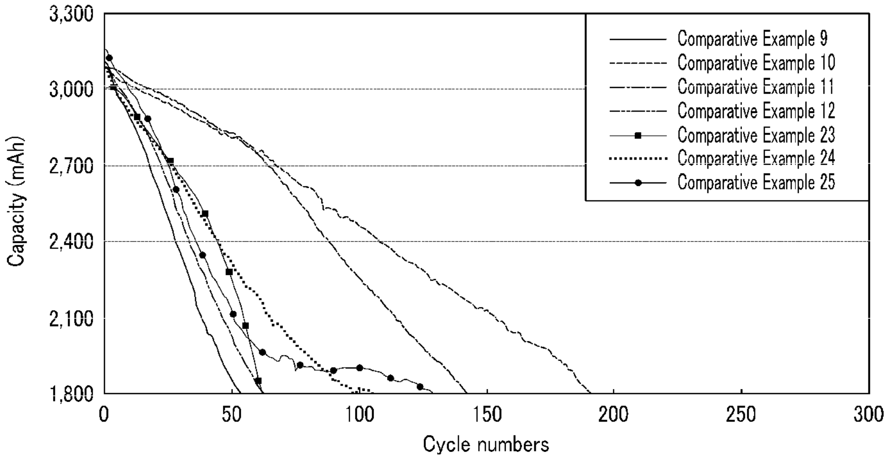
Comparative Example 9
Comparative Example 10
Comparative Example 11
Comparative Example 12
Comparative Example 23
Comparative Example 24
Comparative Example 25
Capacity (mAh)
3,300
3,000
2,700
2,400
2,100
1,800
0
50
100
150
200
250
300
Cycle numbers

FIG.3

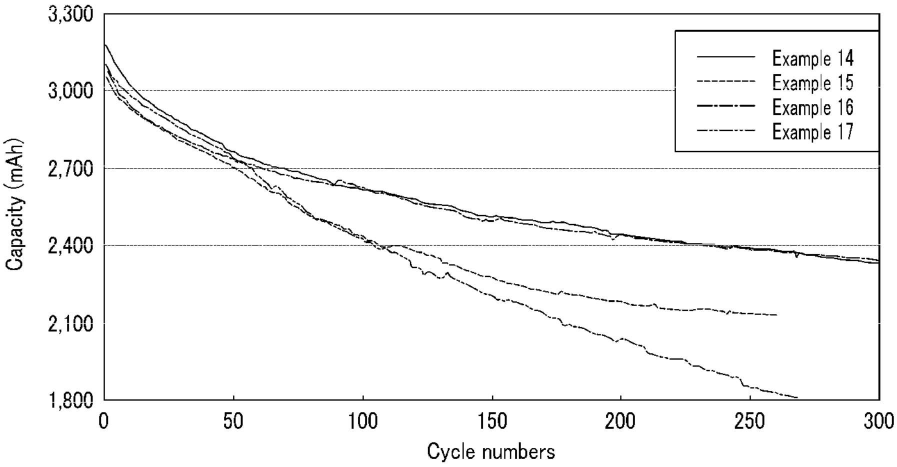
Example 14
Example 15
Example 16
Example 17
Capacity (mAh)
3,300
3,000
2,700
2,400
2,100
1,800
0
50
100
150
200
250
300
Cycle numbers

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010261068 A
- US 2006124973 A
- JP 2007141831 A
- US 2001019800 A
- EP 2498329 A